# EUROPÄISCHE PATENTSCHRIFT

(11) **EP 1 049 606 B1**
(45) Veröffentlichungstag und Bekanntmachung des Hinweises auf die Patenterteilung: **26.11.2003**
(21) Anmeldenummer: 99908748.9
(22) Anmeldetag: 27.01.1999
(51) Int. Cl.: B60R 21/00

(54) **AIRBAG-SENSORIK**
AIRBAG SENSOR SYSTEM
SYSTEME DE DETECTEURS POUR AIRBAG

(30) Priorität: 28.01.1998 DE 19803068
(43) Veröffentlichungstag der Anmeldung: 08.11.2000
(73) Patentinhaber: DaimlerChrysler AG, 70567 Stuttgart (DE)
(72) Erfinder: JACOB, Lutz, D-89275 Elchingen (DE); WEISS, Georg, D-85110 Kipfenberg (DE)
(86) Internationale Anmeldenummer: DE9900191
(87) Internationale Veröffentlichungsnummer: WO99038730

(56) Entgegenhaltungen:
- EP-A- 0 728 624
- WO-A-98/26308
- DE-A- 19 546 715

## Beschreibung

Die Erfindung betrifft eine Airbag-Sensorik zur Auslösung eines Seitenairbags in einem Kraftfahrzeug gemäß dem Oberbegriff des Patentanspruchs 1.

Eine derartige Airbag-Sensorik ist aus der Schrift DE-A-19546715 bekannt.

Bekannte Auslösungsysteme für Airbags verwenden als auslösende Sensoren Beschleunigungsschalter oder Widerstandsfolien. Die Beschleunigungsschalter und auch die Widerstandsfolien sprechen bei einer Kollision mit einem externen Fremdkörper erst an, nachdem eine Deformation der Karosserie eingeleitet worden ist. Wegen der geringen Knautschzonen im Türbereich und ggf. bei bestimmten KFZ-Typen auch im Frontbereich ist eine rechtzeitige Auslösung der Airbags von größter Bedeutung für die Sicherheit der Insassen. Außerdem ist es vorteilhaft, die relative Geschwindigkeit des Kollisionsgegeners als Auslösekriterium zu berücksichtigen, da damit eine Auslösung bei einer zu erwartenden quasistatischen Verformung der Karosserie unterdrückt werden kann. Mit Beschleunigungsschaltern oder Widerstandsfolien ist eine Bestimmung der relativen Geschwindigkeit des Kollisionsgegners nicht möglich.

Die Ansprechzeit der bekannten Airbagauslösesysteme ist zu lang. Die Schalter sprechen erst an, nachdem eine Deformation eingeleitet ist. Die Schalter und nachgeschaltete Elektronik bekannter Systeme benötigen etwa 5ms zur Generierung eines Freigabeimpulses, bei einer im Kollisionsfall für die Airbagentfaltung zur Verfügung stehenden Gesamtzeit von 20ms.

Beispielsweise wird in der DE 195 46 715 A1 ein Airbagsensorsystem zur Verkürzung der Ansprechzeit eines Airbagsensors vorgestellt. Dabei werden in eine Karosserietür mindestens zwei nebeneinander beabstandet angeordnete Sensoren integriert, die sich annähernde Kollisionsobjekte detektieren. Hierbei wird jedoch keine Klassifikation des Objektes selbst vorgenommen.

Ebenso wird in der EP 0 728 624 A2 ein System beschrieben, das mittels einer Radarsensorik sowie einer Entscheidungslogik das Auslösen von Airbags einleitet.

Der Erfindung liegt die Aufgabe zugrunde, einen rechtzeitigen Auslösezeitpunkt für eine wirksame Airbag-Entfaltung zu generieren und dabei die relative Geschwindigkeit des Kollisionsgegners als Auslösekriterium zu berücksichtigen.

Diese Aufgabe wird erfindungsgemäß durch die Merkmale des Patentanspruchs 1 gelöst. Weiterbildungen der Erfindung sind in den Unteransprüchen angegeben.

Die Erfindung verwendet vorteilhaft Millimeterwellensensoren für die Erfassung der relativen Geschwindigkeit des in den Nahbereich des Kraftfahrzeuges eindringenden Objektes. Außerdem kann über die Millimeterwellen-Meßergebnisse eine Klassifizierung eines Kollisionsobjektes nach Größe und Form erfolgen und so das Objekt bestimmten Fahrzeugtypen oder anderen Gegenständen wie z.B. Masten, Steinen usw. zugeordnet werden. Über diese Klassifizierung läßt sich die mangelnde Kenntnis über die Masse des Kollisionsobjektes ausgleichen und somit die Auslöseanalyse bezüglich des Gefährdungspotentials verbessern. Die Verwendung von Millimeterwellensensoren hat gegenüber optischen Sensoren den Vorteil, daß keine optischen Fenster in der Karosserie erforderlich sind und somit die Sensoren unempfindlich gegenüber Verschmutzung sind.

Anhand der Zeichnung wird ein Ausführungsbeispiel der Erfindung näher erläutert.
- Fig. 1: zeigt die grundsätzliche Sensorkonfiguration für eine Fahrzeugseite,
- Fig. 2: zeigt die radartechnische Auflösung des Kollisionsobjektes,
- Fig. 3: zeigt das Verfahren zur Extrahierung der Objektklassifikation,
- Fig. 4: zeigt die Sensorsignale und das Auslösesignal bei paralleler Vorbeifahrt und
- Fig. 5: zeigt die Sensorsignale und das Auslösesignal für eine Aufprallsituation.

Die grundsätzliche Sensorkonfiguration für eine Fahrzeugtür/-seite zeigt Fig.1a. Die Konfiguration jeder der Fahrzeugseiten enthält zwei Höchstfrequenzfrontends. In Fig.1a sind nur zwei dieser Frontends dargestellt, die in der nachfolgenden Beschreibung als Sensor 1 und Sensor 2 bezeichnet werden. Die Sensoren der zweiten Seite sind an der für alle Sensoren gemeinsamen Signalaufbereitung 3 nur mit ihren Signalpfeilen angedeutet. Jeder der Sensoren 1 und 2 erhält durch die Anwendung eines bekannten "Zwei-Frequenzverfahrens" die Fähigkeit Radar-Objekte im Nahfeld mit hoher Auflösung zu vermessen. In der Signalaufbereitung 3 werden aus den Sensorsignalen die Entfernungswerte Rn und die Geschwindigkeitswerte Vn der Echozentren 6 des in den Nahbereich der Sensoren eintretenden Kollisionsobjektes ermittelt.

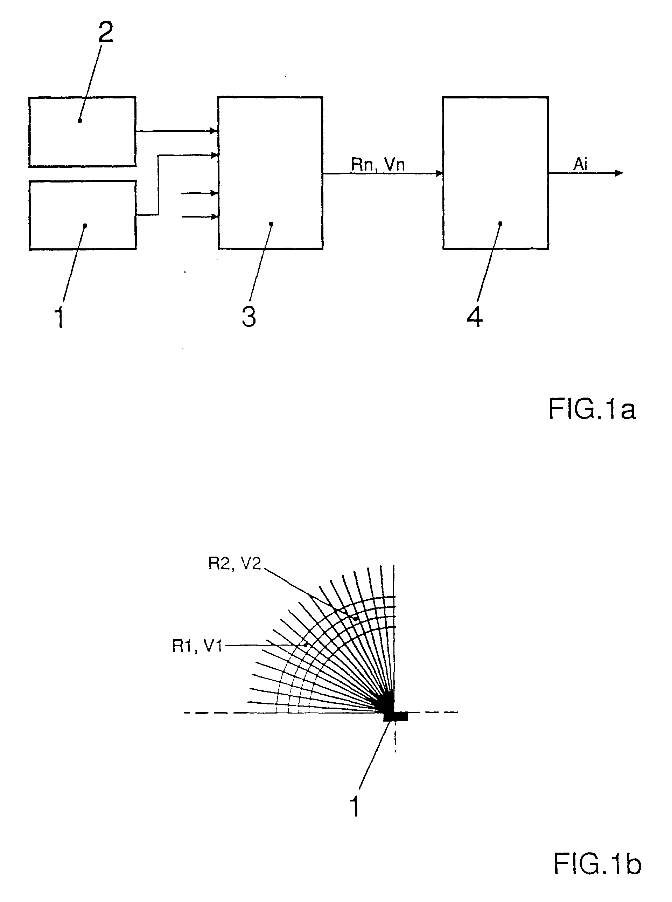

Fig. 1b verdeutlicht die daraus entstehende räumliche Analyse mit äquidistanten Entfernungs-und Geschwindigkeitszonen. Die äquidistanten Entfernungszonen entstehen als konzentrische, aneinandergrenzende, schmale Bogensegmente um den Mittelpunkt des Sensors 1 herum und die äquidistanten Geschwindigkeitszonen als vom Sensormittelpunkt strahlenförmig ausgehende, aneinandergrenzende Segmente. Beispielhaft sind zwei erfaßte Echozentren eines Kollisionsobjektes mit ihren Wertepaaren R1,V1 und R2,V2 dargestellt.

Das Situationsanalysemodul 4 generiert einen Auslöseimpuls Ai auf der Basis der voranstehend beschriebenen Geschwindigkeitsanalyse und der ebenfalls aus den Sensormeßwerten in dem Modul durchgeführten Objektklassifikation mittels Merkmalsbildung. Weiterhin wird in dem Situationsanalysemodul 4 aus den Meßwerten analysiert, ob es sich um eine Aufprallsituation oder um eine ungefährliche, parallele Vorbeifahrt handelt.

Die Geschwindigkeit eines Radarzieles wird durch Messung der Dopplerfrequenz bestimmt. Die Bestimmung der Entfernung zu einem Radarziel wird durch besondere Modulationsarten eines Sensors erreicht. Da für eine Airbag-Sensorik eine hohe Entfernungsauflösung gefordert wird (< 10cm), werden für die Modulation keine Laufzeitverfahren, wie die Frequenzmodulation mit linearer, sinusförmiger oder beliebiger Modulationswellenform oder Pulsverfahren angewendet, da diese die werden bei den geforderten Auflösungen Phasenmessungen, die z.B. mittels eines Zwei-Frequenzverfahrens (oder auch Mehrfrequenzverfahren) oder mittels Amplitudenmodulation ausgeführt werden. Diese Phasenmeßmethoden sind jedoch prinzipiell nur bei Einzelzielsituationen anwendbar. Ein komplexes, aus vielen Echozentren bestehendes Kollisionsobjekt muß deshalb radartechnisch aufgelöst werden.

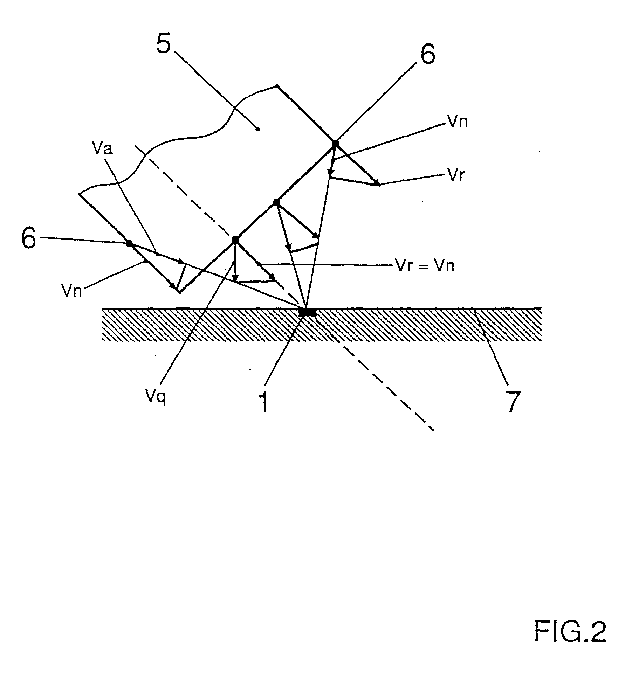

Fig. 2 zeigt eine derartige radartechnische Auflösung an einem Kollisionsobjekt 5, das sich einem Sensor 1 nähert. Der Sensor 1 löst das Kollisionsobjekt in einzelne Echozentren 6 auf und erfaßt die unterschiedlichen Entfernungswerte Rn und Geschwindigkeitswerte Vn, mit denen sich die einzelnen Echozentren dem Sensor 1 nähern. Die Linie der maximalen Dopplerfrequenz ist gestrichelt dargestellt. Auf dieser Linie entspricht der Geschwindigkeitswert Vn in Größe und Richtung der Relativgeschwindigkeit Vr. Aus der bestimmbaren Richtung und Größe der Relativgeschwindigkeit Vr läßt sich die Quergeschwindigkeit Vq berechnen, mit der sich das Kollisionsobjekt 5 lotrecht zur Türoberfläche 7 nähert.

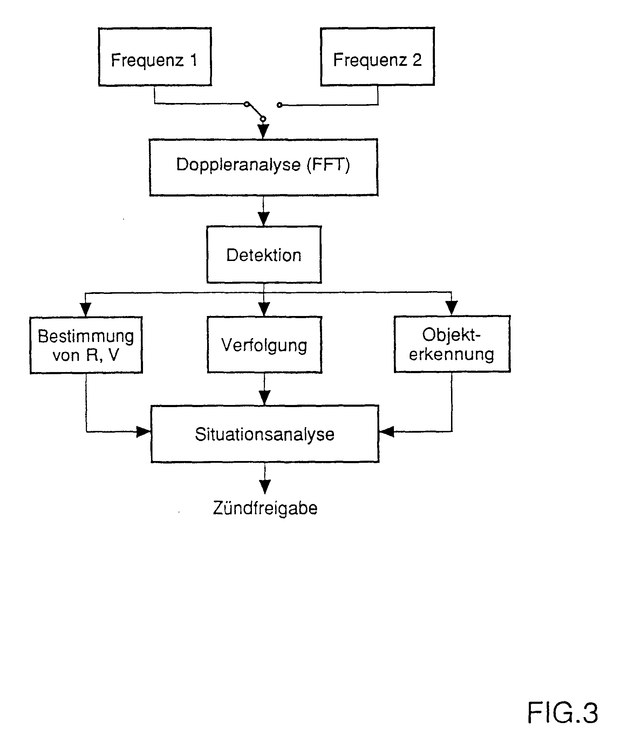

Das Verfahren zur Extrahierung der objektklassifikation ist anhand von Fig.3 erläutert. Als Ausführungsbeispiel ist hier ein Höchstfrequenzfrontend im Millimeterwellenbereich bei 76 GHz angenommen, das zwischen den Sendefrequenzen - Frequenz 1 und Frequenz 2 - umgeschaltet oder simultan bei diesen Frequenzen betrieben wird. Dieses Verfahren ist unter dem Begriff "Zwei-Frequenzverfahren" bekannt. Die Phasen, der bei beiden Sendefrequenzen entstehenden Dopplersignale, sind innerhalb eines Eindeutigkeitsbereiches ein direktes Maß für den Abstand des Kollisionsobjektes 5 vom Sensor. Für einen gewählten Frequenzabstand von 50 MHz zwischen Frequenz1 und Frequenz 2 liegt dieser Eindeutigkeitsbereich bei 3 m. Da eine Vielfachreflexionsumgebung vorliegt, müssen die einzelnen Echozentren 6 durch eine Doppleranalyse in einer FFT-Dopplerfilterbank voneinander getrennt werden. Bei einer Analysezeit von z.B. 1ms ergibt sich eine Geschwindigkeitsauflösung von 2,4 m/s.

Für die sich anschließende Detektion werden die Beträge der Dopplerspektren auf kontrastbedingte Schwellwertüberschreitungen untersucht. Die Entfernungswerte Rn werden aus der Relativphase der FFT-Ausgangssignale bestimmt.

Die relevanten Echozentren 6 werden in Rn und Vn über der Zeit verfolgt. Mit dieser Verfolgung kann der Aufschlag des Kollisionsobjektes 5 auf der Tür bestimmt werden. Für die Objekterkennung werden aus den FFT-Daten über mehrere Auswertezyklen Merkmale extrahiert. Ein Erkennungssystem führt anhand dieser Merkmale eine Objektklassifikation durch.

Eine sich anschließene Situationsanalyse generiert bei entsprechender Größe des Kollisionsobjektes 5 und bei Überschreitung eines Schwellwertes der Quergeschwindigkeit Vq, bzw. bei einer vorgegebenen Relation von Quergeschwindigkeit Vq und Größe des Kollisionsobjektes 5 einen Auslöseimpuls Ai für die Zündfreigabe der Airbag-Auslösung.

Damit die Normalsituation einer parallelen Vorbeifahrt eines Kollisionsobjektes 5 von einer drohenden Crash-Situation unterschieden werden kann, ist eine Anordnung von mindestens zwei zueinander beabstandeten Sensoren lund 2 in einer Tür erforderlich. Der Abstand muß einige dm betragen. Die jeweils in den Sensoren 1 und 2 gewonnenen Geschwindigkeitswerte Vn und Entfernungswerte Rn werden über eine Differenzbildung zwischen den Werten der beiden Sensoren mit zur Generierung des Auslöseimpulses Ai herangezogen. Die Sensoren 1 und 2 sind zur Gewinnung der Informationen im Türhalbraum mit Antennen ausgestattet, die eine große Halbwertsbreite besitzen, beispielsweise > 60 °.

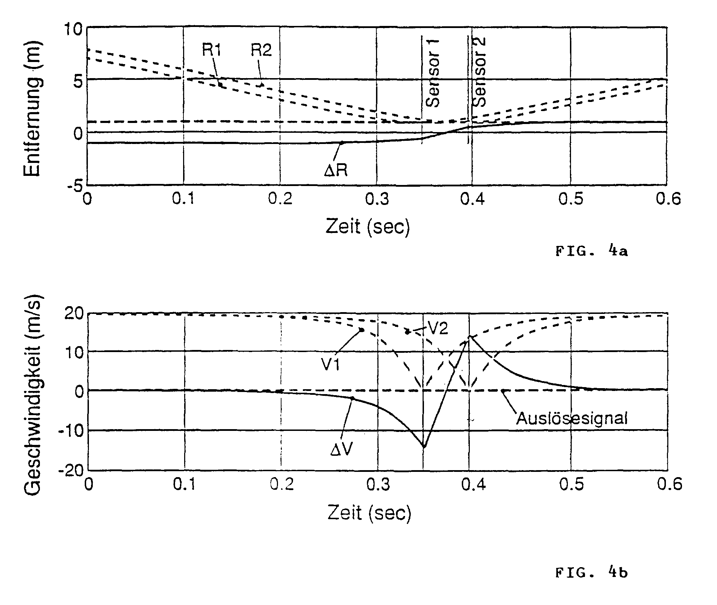

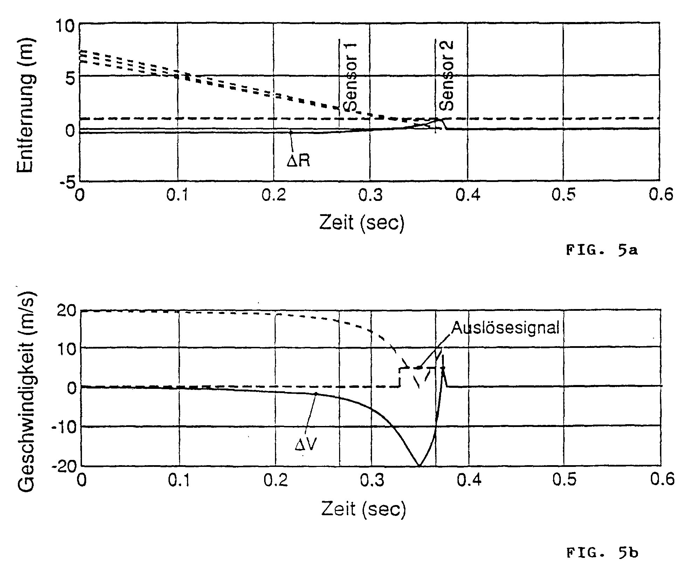

Stattet man das Radar mit realisierbaren Auslösungswerten aus, z.B. ΔR = 0.1m und ΔV = 1 m/s, so ist der auf der Basis der Differenzbildung der Größen Rn und Vn gewonnene Verlauf des Auslösesignales für eine beispielhaft ablaufende parallele Vorbeifahrt in Fig.4 und für eine beispielhafte Aufprallsituation in Fig.5 gezeigt.

## Patentansprüche

1. Sensorik für die Auslösung eines Seitenairbags in einem Kraftfahrzeug bestehend aus mindestens einem Sensor in der Karosserietür, wobei in jeder Karosserietür zwei zueinander beabstandete Millimeterwellen abstrahlende Sensoren (1) und (2) integriert sind, deren Meßsignale in einer Signalverarbeitung (3) ausgewertet werden und in einem nachgeschalteten Situationsanalysemodul (4) die Quergeschwindigkeit (Vq) in bezug auf die Türoberfläche (7) ermittelt wird und im Gefährdungsfall ein Auslöseimpuls (Ai) für eine Auslöseelektronik des Airbags generiert wird,
**dadurch gekennzeichnet,**
**daß** die Meßsignale der Sensoren (1) und (2) mittels eines Mehrfrequenz-Modulationsverfahrens generiert sind,
**daß** die gewonnenen Meßsignale in der Signalverarbeitung (3) radartechnisch nach einzelnen Echozentren (6) des Kollisionsobjektes (5) in Geschwindigkeitswerte (Vn) und Entfernungswerte (R) aufgelöst sind, aus den Meßwerten eine Klassifizierung des Kollisionsobjektes (5) nach dessen geometrischen Eigenschaften erfolgt und aus einer Differenzbildung der beiden Sensormeßergebnisse ein Kriterium gewonnen ist, ob eine parallele Vorbeifahrt oder eine Aufprallsituation vorliegt und
**daß** aus einer analytischen Verknüpfung der ermittelten Quergeschwindigkeit (Vq), Objektklasse und Aufprallsituation in dem Situationsanalysmodul (4) im Gefährdungsfall ein Auslöseimpuls (Ai) für die Auslöseelektronik des Airbags generiert ist.

2. Sensorik nach Anspruch 1, **dadurch gekennzeichnet, daß** eine Signalverarbeitung (3) vorgesehen ist, durch die eine Klassifizierung des Kollisionsobjektes (5) nach dessen Größe und/oder nach dessen Form erfolgt.

3. Sensorik nach Anspruch 1 oder 2, **dadurch gekennzeichnet, daß** die Sensoren (1 und 2) als 76-GBz-Höchstfrequenzfrontends ausgebildet sind.

4. Sensorik nach Anspruch 1, 2 oder 3, **dadurch gekennzeichnet, daß** es sich bei dem Mehrfrequenzverfahren um ein "Zwei-Frequenzverfahren" mit einem Abstand von 50 MHz zwischen den beiden Frequenzen handelt.

## Claims

1. Sensor system for triggering a side airbag in a motor vehicle composed of at least one sensor in the bodywork door, two sensors (1) and (2) which emit two millimetre waves which are spaced apart from one another being integrated in each bodywork door, the measurement signals of which sensors (1) and (2) are evaluated in a signal processing device (3) and the lateral speed (Vq) with respect to the surface (7) of the door being determined in a downstream situation analysis module (4) and in the event of danger a triggering pulse (Ai) is generated for an electronic triggering system of the airbag, **characterized in that** the measurement signals of the sensors (1) and (2) are generated by means of a multifrequency modulation method, **in that** the acquired measurement signals in the signal processing device (3) are resolved into speed values (Vn) and distance values (R) by radar means after individual echo centres (6) of the collision object (5), a classification of the collision object (5) according to its geometrical properties is carried out on the basis of the measured values and a criterion as to whether a vehicle is travelling past in parallel or there is an impact situation is formed on the basis of forming differences between the two sensor measurement results, and **in that** in the event of danger a triggering pulse (Ai) for the electronic triggering system of the airbag is generated in the situation analysis module (4) on the basis of an analytical logic linking of the determined lateral speed (Vq), object class and impact situation.

2. Sensor system according to Claim 1, **characterized in that** a signal processing device (3) is provided, by means of which the collision object (5) is classified according to its size and/or its form.

3. Sensor system according to Claim 1 or 2, **characterized in that** the sensors (1 and 2) are formed as 76 GHz very high frequency front ends.

4. Sensor system according to Claim 1, 2 or 3, **characterized in that** the multi-frequency method is a "two frequency method" with an interval of 50 MHz between the two frequencies.

## Revendications

1. Système de détection pour le déclenchement d'un coussin gonflable de sécurité latéral dans un véhicule automobile, constitué d'au moins un détecteur disposé dans la porte de la carrosserie, deux détecteurs (1) et (2) qui émettent des ondes millimétriques étant intégrés dans chaque porte de la carrosserie à distance l'un de l'autre, leurs signaux de mesure étant évalués dans un traitement de signaux (3) et la vitesse transversale (Vq) par rapport à la surface de la porte (7) étant déterminée dans un module (4) d'analyse de situation situé en aval, et en cas de danger, une impulsion de déclenchement (Aᵢ) de l'électronique de déclenchement du coussin gonflable de sécurité étant créée,
**caractérisé en ce que**
les signaux de mesure des détecteurs (1) et (2) sont créés au moyen d'un procédé de modulation multifréquences,
**en ce que** dans le traitement de signaux (3), les signaux de mesure obtenus sont décomposés par une technique à radar en fonction des centres individuels d'écho (6) de l'objet de collision (5) en valeurs (Vn) de vitesse et en valeurs (R) de distance, **en ce qu'**un classement de l'objet de collision (5) s'effectue à partir des valeurs de mesure et en fonction de ses propriétés géométriques, et **en ce qu'**à partir de la formation d'une différence entre les résultats de mesure des deux détecteurs, un critère est formé pour indiquer s'il s'agit d'un déplacement en parallèle ou d'une situation de future collision et
**en ce qu'**à partir d'une association analytique entre la vitesse transversale (V_{q}), la classe d'objet et la situation de future collision que l'on a déterminées, une impulsion de déclenchement (Aᵢ) pour l'électronique de déclenchement du coussin gonflable de sécurité est créée dans le module (4) d'analyse de situation.

2. Système de détection selon la revendication 1, **caractérisé en ce qu'**il prévoit un traitement (3) des signaux qui effectue un classement de l'objet de collision (5) en fonction de sa taille et/ou de sa forme.

3. Système de détection selon la revendication 1 ou 2, **caractérisé en ce que** les détecteurs (1 et 2) sont configurés comme interfaces à fréquence élevée, de 76 GHz.

4. Système de détection selon la revendication 1, 2 ou 3, **caractérisé en ce que** le procédé multifréquences est un procédé "à deux fréquences" dont l'écart entre les deux fréquences est de 50 MHz.
